# DEMANDE DE BREVET EUROPEEN

(11) **EP 2 309 549 A2**
(43) Date de publication de la demande: **13.04.2011**
(21) Numéro de dépôt: 10187177.0
(22) Date de dépôt: 11.10.2010
(51) Int. Cl.: H01L 31/042, H01L 31/048, F24J 2/52

(54) **Dispositif pour la fixation de modules photovoltaïques**

(30) Priorité: 12.10.2009 FR 0957105; 19.07.2010 FR 1055827
(71) Demandeur: Le Triangle, 41160 Saint Hilaire La Gravelle (FR)
(72) Inventeur: Deshayes, Gilles, 41 100, Renay (FR)
(74) Mandataire: Aupetit, Muriel J. C.

(57) **Abrégé**

La présente invention concerne un dispositif pour la fixation de modules photovoltaïques comportant au moins un premier profilé (2), dit profilé d'assise, présentant la forme générale d'un Oméga (Q) et comprenant une âme (20), deux ailes latérales (21, 22) s'étendant en regard et deux surfaces de base (23, 24) formant les retours respectifs des extrémités des ailes à l'opposé de l'âme et étant parallèles à l'âme, caractérisé en ce qu'il comporte deux gouttières longitudinales (33, 34) associées respectivement de part et d'autre des ailes (21, 22) du profilé (2), les gouttières (33, 34) étant parallèles et disposées à distance des surfaces de base (23, 24) du profilé pour ménager des espaces d'accueil (4) étanches et dans lesquels cheminent les câbles électriques.

## Description

L'invention concerne un dispositif, intégrant des profilés de forme particulièrement adaptée, pour la fixation de modules photovoltaïques, les modules pouvant notamment constituer tout ou partie d'une toiture étanche d'habitation ou d'un local industriel.

Depuis quelques années, pour des raisons économiques, un intérêt certain quant à l'usage de l'énergie solaire s'est développé pour assurer en partie les besoins de consommation en électricité des habitations ou locaux commerciaux.

Pour fournir ces besoins en électricité, il est connu de disposer sur les toitures, des modules photovoltaïques comprenant des cellules photovoltaïques couplées en série les unes aux autres et générant un courant continu lorsqu'elles sont exposées à la lumière.

Certaines toitures de grande superficie, telles que celles de bâtiments d'élevage, sont même de plus en plus transformées ou construites, en y assemblant des modules photovoltaïques, l'électricité produite étant généralement revendue à des compagnies de production d'électricité.

Un module photovoltaïques est le plus souvent formé d'un panneau feuilleté, comprenant deux substrats verriers en face avant et face arrière, et entre lesquels sont agencées des cellules photovoltaïques constituées d'un empilement de matériaux semi-conducteurs (par exemple du silicium) pris en sandwich entre deux électrodes métalliques.

L'ensemble des éléments ci-dessus constituant les cellules photovoltaïques est entouré et porté par un cadre métallique de support, intégrant par ailleurs les câbles pour la distribution électrique. Ce cadre offre l'avantage de pouvoir rapporter et fixer aisément un module photovoltaïque sur la toiture.

La fixation de modules photovoltaïques est habituellement réalisée en fixant sur la charpente existante, plus particulièrement sur et transversalement aux liteaux, des profilés métalliques espacés de la largeur d'un module. Les modules sont ensuite rapportés contre les profilés, et y sont solidarisés par des moyens de fixation appropriés.

Divers types de profilés et de moyens de fixation existent. Le plus souvent les profilés présentent une symétrie par rapport à leur axe médian longitudinal, deux modules adjacents latéraux étant rapportés de part et d'autre de cet axe. Par ailleurs, les moyens de fixation consistent par exemple en des attaches dont une partie sous forme de tige est introduite à la jointure de modules adjacents et est fixée dans le profilé, tandis qu'une autre partie sous forme de platine vient chapoter les bords de deux modules.

L'étanchéité de la toiture est quant à elle obtenue par divers moyens en fonction des types de profilés et de moyens de fixation utilisés.

L'invention a pour but de proposer une autre solution aux systèmes connus de fixation de modules photovoltaïques.

Le dispositif de l'invention assurant la fixation de modules photovoltaïques comporte au moins un premier profilé, dit profilé d'assise, présentant la forme générale d'un Oméga (Ω) et comprenant une âme, deux ailes latérales s'étendant en regard, et deux surfaces de base formant les retours respectifs des extrémités des ailes à l'opposé de l'âme et étant parallèles à l'âme, et est caractérisé en ce qu'il comporte deux gouttières longitudinales associées respectivement de part et d'autre des ailes du profilé, les gouttières étant parallèles et disposées à distance des surfaces de base du profilé pour ménager des espaces d'accueil qui servent en particulier au cheminement des câbles électriques connectés aux modules photovoltaïques.

Ainsi, le premier profilé constitue l'assise du dispositif en étant fixé par ses surfaces de base aux pannes de la charpente, les gouttières agencées en hauteur des surfaces de base assurant d'une part l'étanchéité de la toiture, et procurant d'autre part un espace étanche suffisant au passage des câbles électriques des modules.

On entend dans la suite de la description par "longitudinal", le qualificatif se rapportant à une orientation parallèle à la pente d'une toiture, tandis que "transversal" se rapporte à une orientation perpendiculaire à cette pente.

Le qualificatif « latéraux » pour des modules formant la couverture d'une toiture, sera relatif à des modules agencés côte à côte selon une direction transversale à la pente de la toiture ; et on entend par « supérieur » et « inférieur » les qualificatifs d'éléments positionnés vers le haut et respectivement vers le bas selon la pente de la toiture.

Dans un mode de réalisation préféré, le dispositif comporte un ensemble d'au moins deux profilés dont le profilé d'assise et un deuxième profilé comprenant une âme, deux ailes latérales dont les extrémités opposées à l'âme forment les gouttières longitudinales, le deuxième profilé étant agencé par son âme à cheval sur l'âme du premier profilé.

De préférence, les profilés son métalliques et fabriqués par exemple par une technique de profilage.

La constitution des gouttières par un second profilé permet de réaliser facilement un profilage et associer ce second profilé par simple emboîtement sur le profilé d'assise. En variante, les gouttières pourraient être associées directement au profilé d'assise en y étant soudées.

La forme générale du premier profilé en Ω présente avantageusement une section médiane de forme générale trapézoïdale, les ailes étant sensiblement obliques par rapport à l'âme. Un tel profil permet aisément d'assurer un chevauchement des profilés lorsque plusieurs profilés sont à abouter selon la pente de la toiture pour remplacer un chevron usuel de charpente.

En outre, les surfaces de base en connexion avec les extrémités des ailes permettent un ancrage du profilé au plus prêt de la partie médiane dudit profilé procurant une solide assise pour ledit profilé et par conséquent pour le dispositif porteur des modules.

Selon une caractéristique, le premier profilé comprend à ses extrémités distales des moyens de fixation permettant d'y fixer d'autres premiers profilés. Les premiers profilés présentant tous la même section se chevauchent au niveau de leurs extrémités distales et sont assemblés par exemple par vissage. Les premiers profilés, ainsi assemblés et de par leur profilage en Oméga, forment un système continu en présentant une résistance mécanique suffisante pour remplacer les chevrons habituels d'une charpente. En outre, ils ne nécessitent plus d'établir leur jonction au niveau de chaque panne de la charpente, ce qui gagne en temps de mise en oeuvre.

Avantageusement, les ailes du profilé d'assise comportent en regard de l'espace contenu entre les surfaces de base et les gouttières, une pluralité d'orifices qui permettent le passage des câbles électriques le long de la toiture.

Selon une caractéristique, le dispositif qui supporte le bord de respectivement deux modules photovoltaïques adjacents, comporte à l'opposé des surfaces de base, une nervure longitudinale dite de butée, en particulier solidaire de l'âme du deuxième profilé, cette nervure de butée servant sur chacune de ses parois latérales à caler latéralement le bord d'un module.

De plus, la nervure en combinaison avec la partie de l'âme qui lui est associé fournit avantageusement une glissière longitudinale le long de laquelle peut coulisser les modules pour les agencer aisément à la hauteur voulue de la toiture.

Par ailleurs, en cas de pénétration d'eau à la jonction des modules et de la nervure de butée du deuxième profilé, l'eau ruissèle alors le long de la nervure, de l'âme et des ailes du deuxième profilé pour tomber dans les gouttières longitudinales qui fournissent des moyens d'écoulement d'eau longitudinalement à la toiture dans ces rigoles. Les gouttières disposées selon le sens de pente de la toiture débouchent au niveau du bas de la charpente dans une gouttière usuelle.

Le dispositif comporte par ailleurs au moins une pareclose destinée à coopérer, de préférence par emboîtement, avec la nervure médiane de butée du ou des profilés, et à chevaucher la face externe (face avant) des bords longitudinaux des modules.

La pareclose est fixée à la nervure de butée, notamment par des vis dotées de rondelles d'étanchéité.

Selon une autre caractéristique, le dispositif comporte des goulottes transversales destinées à être agencées transversalement à au moins deux profilés d'assise espacés, et être mises sous et en regard de la jonction transversale de deux modules supérieur et inférieur aboutés, les extrémités distales des goulottes débouchant en regard des goulottes longitudinales.

Le dispositif comporte également des systèmes de fixation des goulottes transversales. Ces systèmes sont amovibles, réglables en hauteur et fixés aux bords libres des gouttières longitudinales, réalisant le maintien des goulottes à une hauteur proche de l'âme du premier profilé.

Les goulottes transversales sont par conséquent, en position montée du dispositif, agencées à une hauteur supérieure aux gouttières longitudinales. Le réglage en hauteur des goulottes par le système de fixation permet de leur procurer une pente. Elles peuvent récupérer l'eau s'infiltrant à la jonction transversale de deux modules qui se déverse ensuite dans les gouttières longitudinales.

Le dispositif monté et fixé sur une charpente permet ainsi de recevoir des modules photovoltaïques formant tout ou partie du revêtement de la toiture.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en perspective partielle de modules photovoltaïques constituant tout ou partie d'une toiture, montés et fixés à l'aide du dispositif de l'invention;
- La figure 2 est une vue en perspective du dispositif de l'invention;
- La figure 3 illustre une vue en coupe transversale du dispositif associé à deux modules photovoltaïques adjacents latéraux;
- La figure 4 est une vue en coupe transversale d'un ensemble de profilés selon l'invention.

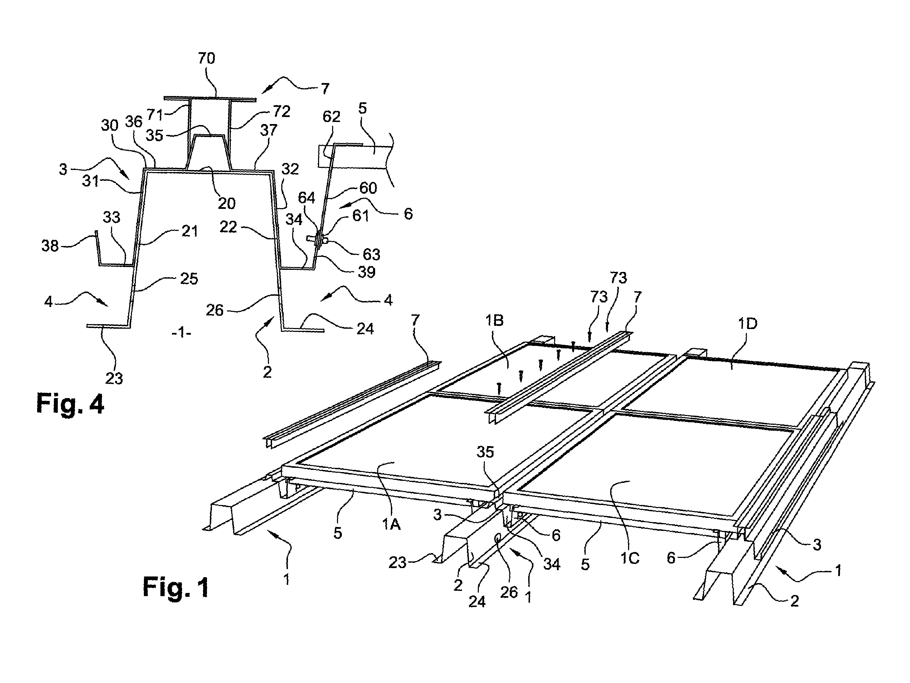

Les figures 1 à 3 illustrent un dispositif de l'invention permettant le montage sur une toiture de modules photovoltaïques 1A, 1B, 1C, 1D, etc... Les modules photovoltaïques sont avantageusement utilisés en tant que revêtement de toiture (pour tout ou partie de la toiture) grâce au dispositif de l'invention garantissant, outre la fixation, l'étanchéité de la toiture.

Le dispositif comporte une pluralité d'ensembles 1 de profilés supportant les modules photovoltaïques, et des parecloses 7 de blocage en position montée des modules, destinées à être agencées à la jonction longitudinale de modules adjacents latéraux, par exemple entre les modules 1A et 1C, et 1B et 1D.

Les ensembles 1 de profilés sont espacés deux à deux d'une distance correspondant à la largeur d'un module, un même ensemble servant au support d'un bord longitudinal de deux modules adjacents latéraux.

Les modules sont disposés entre deux ensembles et aboutés par leurs côtés transversaux; deux modules adjacents inférieur, tel que 1A ou 1C, et supérieur, tel que 1 B ou 1 D, sont associés bord à bord par leur tranche. Des moyens d'étanchéité non illustrés sont agencés à l'interface des tranches des modules pour assurer une zone d'étanchéité transversale.

Les modules sont généralement rectangulaires. Ils sont ici assemblés en mode "portrait", c'est-à-dire que leurs grands côtés sont parallèles à la pente de la toiture. Ils peuvent en variante être agencés en mode "paysage", leurs grands côtés étant transversaux à la pente de la toiture et parallèles aux pannes de la charpente. Dans ce dernier mode, les profilés sont simplement espacés d'une plus grande distance et les parecloses restent également disposées longitudinalement, à cheval sur les modules en regard des profilés.

Les ensembles 1 de profilés sont de préférence métalliques, tels qu'en acier inoxydable, acier électro-zingué, acier galvanisé, ou aluminium. Un profilé est réalisé par exemple par une technique de profilage à partir d'un feuillard. En variante, les profilés sont en matériau composite obtenu par extrusion.

Selon l'invention et en regard de la vue en coupe de la figure 4, un ensemble 1 de profilés comporte un premier profilé 2 formant l'assise du dispositif et un deuxième profilé 3 à fonction de support des modules. Le deuxième profilé constitue également un moyen d'évacuation d'eau risquant de s'infiltrer entre les modules afin de garantir l'étanchéité du dispositif et par conséquent de la toiture.

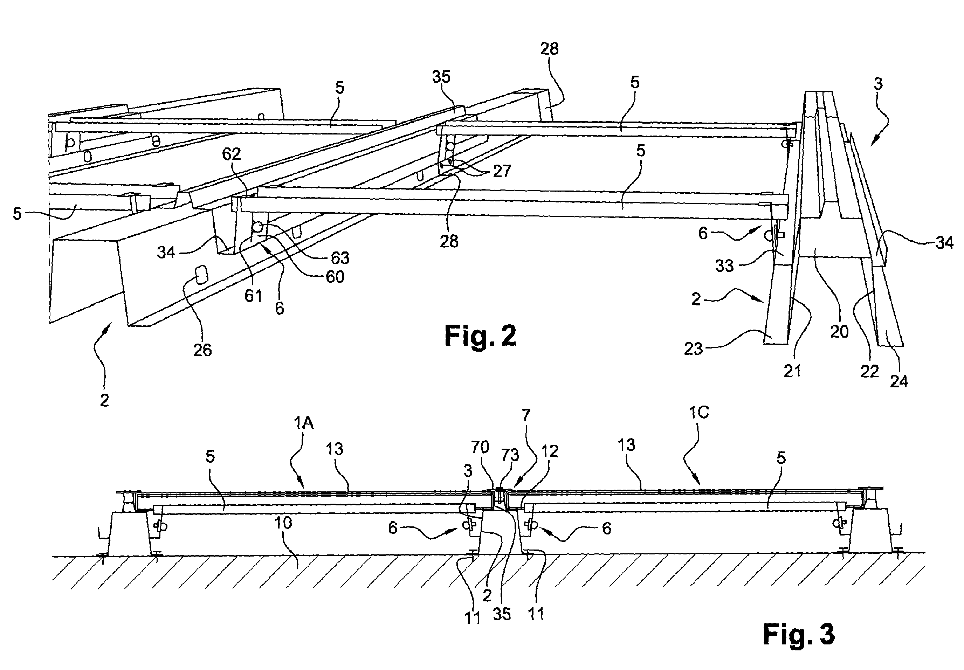

En regard des figures 2 et 4, le premier profilé 2 présente un corps longitudinal de section générale en forme d'Oméga (Ω) et pourvu d'une âme 20, de deux ailes latérales 21 et 22 agencées en regard, et de deux surfaces de base 23 et 24 connectées aux extrémités des ailes, à l'opposé de l'âme.

La section médiane du corps est trapézoïdale imposant aux ailes une obliquité vers l'extérieur du profilé.

Les surfaces de base 23 et 24 permettent la pose et la fixation du profilé par des vis auto-perforeuses 11 aux panes 10 de la charpente (figure 3).

Contrairement à une toiture classique, la charpente n'a pas besoin de recevoir de chevrons et de liteaux usuels, simplifiant la réalisation de la toiture de l'invention. En effet, les premiers profilés 2 remplacent très avantageusement les chevrons en s'étendant depuis la sablière jusqu'au faîtage et en étant rendus solidaires des pannes de la charpente. Bien entendu, en cas d'intégration de modules sur une charpente usuelle déjà existante, les profilés seront fixés sur les liteaux.

En regard des figures 2 et 4, le deuxième profilé 3 présente également une forme générale en Ω. Il a le même profilage général que celui du premier profilé, de largeur équivalente de manière à ce qu'il puisse chevaucher le premier profilé 2 en s'y collant. De largeur identique à celle du premier profilé, ce profilé est par contre moins haut. Ainsi, en position montée à cheval, des espaces 4 sont ménagés entre les surfaces de base 23 et 24 du premier profilé et la partie inférieure de ce deuxième profilé.

Le deuxième profilé 3 de corps longitudinal comprend donc une âme 30, deux ailes latérales 31 et 32 en regard et obliques. L'extrémité de chacune des ailes, à l'opposé de l'âme, est repliée pour constituer une forme en U constituant une gouttière longitudinale 33, respectivement 34. Les gouttières 33 et 34 forment des rigoles longitudinales d'évacuation d'eau garantissant l'étanchéité de la toiture.

Selon l'invention, les espaces 4 agencés sous les gouttières 33 et 34 forment des zones étanches dans lesquelles peuvent circuler les câbles électriques connectés aux modules. Avantageusement, le premier profilé 2 comporte dans ses ailes 21 et 22 des orifices 25 et 26 qui sont ménagés en regard des espaces 4 sous les gouttières 33 et 34. Une pluralité d'orifices 25 et 26 sont répartis le long des ailes du profilé et permettent le passage des câbles électriques sous et le long de la toiture dans un environnement étanche. Les surfaces de base 23 et 24 servent également de surface de cheminement pour les câbles.

En regard de la figure 4, l'âme 30 du deuxième profilé est pourvue en son milieu d'une nervure longitudinale 35, engendrant respectivement de part et d'autre, deux épaulements 36 et 37 sur lesquels (figure 3) sont destinées à reposer les faces arrière 12 des côtés longitudinaux de deux modules adjacents, tels que 1A et 1C.

La nervure 35 sert avantageusement à la mise en butée et au calage des modules. En outre, elle permet, combinée aux épaulements, de fournir des glissières le long desquelles peuvent coulisser les modules pour les agencer à l'endroit voulu selon la pente du toit.

En outre, le dispositif comprend des parecloses 7 de maintien en position des modules. Les parecloses sont de préférence en matériau métallique, du type aluminium.

Telle qu'illustrée sur les figures 3 et 4, une pareclose 7 présente une âme 70 chevauchant la face externe 13 de deux modules adjacents latéraux 1A et 1 DC disposés de part et d'autre d'un ensemble 1. L'âme 70 est pourvue sur sa face interne, en regard du deuxième profilé 3, de deux ailes d'accroche 71 et 72 parallèles, espacées et en regard, coopérant à cheval par emboîtement avec la nervure longitudinale médiane 35 du profilé.

La pareclose 7 est rendue solidaire du profilé 3 par des moyens de fixation 73 du type vis auto-perforeuse, traversant l'âme de la pareclose et la nervure 35. Une rondelle de caoutchouc est agencée en interface entre la tête de vis et la surface externe de la nervure 35 pour garantir l'étanchéité.

En cas d'infiltration d'eau sous la pareclose 7 le long des bords longitudinaux des modules, l'eau chemine sur la nervure 35, le long des épaulements 36 et 37 et des ailes latérales 31 et 32 pour tomber dans les gouttières 33 et 34 du deuxième profilé. Ces dernières suivent la pente de la toiture et sont destinées à déboucher avantageusement dans une gouttière usuelle à l'extrémité inférieure de la toiture.

On note que les éléments 20, 23, 24, 30, 33, 34, 36 et 37 sont parallèles entre eux et au plan de la toiture. De même, on note que les ailes 21, 22, 31 et 32 sont obliques par rapport au plan de l'embase du premier profilé, et donc par rapport au plan de la toiture.

Pour fournir la longueur adaptée de chevron, les premiers profilés 2 (profilés d'assise) se chevauchent de façon que le profilé supérieur soit à cheval sur le profilé inférieur dans le sens de la pente. La forme trapézoïdale des profilés facilite l'empilement des profilés pour leur stockage et/ou leur transport sur chantier.

La fixation des profilés d'assise 2 est réalisée par vissage 27 en leurs zones d'extrémité distale 28 se chevauchant. L'assemblage des profilés d'assise remplace avantageusement un chevron usuel et s'étend selon la pente de la toiture transversalement aux pannes de la charpente auxquelles les profilés sont fixés. On gagne ainsi en simplicité de fabrication de la charpente, n'ayant plus besoin comme dans les charpentes traditionnelles d'ajouter des chevrons et des liteaux pour assurer le maintien du revêtement de couverture.

L'étanchéité entre modules doit être obtenue de manière longitudinale aux modules d'une part, ce qui est réalisé par les gouttières longitudinales 33 et 34 des deuxièmes profilés, et de façon transversale d'autre part, ce qui est effectué grâce à des goulottes transversales 5 qui débouchent sur les gouttières longitudinales.

Aussi, pour assurer l'étanchéité au niveau d'aboutement transversal des modules, des goulottes 5 sont agencés sous les modules (figures 1 à 3), transversalement aux profilés. Chaque goulotte est à section en U et s'étend entre et transversalement à deux ensembles 1 de profilés. La goulotte, en position montée, est légèrement inclinée par rapport au plan transversal reliant deux ensembles de profilés, l'extrémité d'une goulotte étant plus haute que l'extrémité opposée. La goulotte débouche au niveau de son point le plus bas, au droit des gouttières longitudinales 33 ou 34 d'évacuation.

Des systèmes de fixation 6 (figures 2 à 4) sont prévus pour attacher les goulottes 5 à deux ensembles 1 adjacents. Ces systèmes de fixation sont rendus solidaires des bords libres 38 et 39 des gouttières permettant de fixer les goulottes au-dessus des gouttières 33 et 34. De plus, ils comprennent des moyens de réglage en hauteur des goulottes afin d'incliner celles-ci pour l'écoulement de l'eau.

A titre illustratif et sans être limitatif, un système 6 (figures 2 et 4) comporte une platine 60 comprenant dans sa partie médiane une boutonnière 61 et sur son bord supérieur, un décrochement 62. Le décrochement 62 autorise l'introduction et le support d'une extrémité de goulotte 5. La boutonnière procure un orifice de passage pour une vis de serrage 63 dont le corps est destiné à reposer contre la tranche du bord libre de la gouttière et coopère avec un écrou ou une plaque de serrage 64, tandis que la tête est serrée contre la face externe de la gouttière. En adaptant la hauteur de serrage au niveau de la hauteur de la boutonnière, cela permet d'accommoder la hauteur de l'extrémité de la goulotte et par conséquent son inclinaison.

Des moyens d'étanchéité complémentaires non illustrés, tels que des baguettes d'étanchéité, pourraient être associés à chaque bord supérieur transversal d'un module en position montée du module.

A titre d'exemple, cette baguette en forme de L est un profilé extrudé en matériau polymérique, en élastomère TPE ou autre matériau adapté, du type silicone, PVC extrudé entouré de butyle. En variante, elle peut être métallique et pourvue d'un joint rapporté, la partie métallique étant solidaire de la tranche du module, tandis que le joint est disposé à l'opposé.

Le montage de la toiture grâce au dispositif de l'invention est à présent décrit.

Les profilés d'assise 2 sont assemblés entre eux pour former des chevrons. Ils sont ensuite fixés aux pannes 10 de la charpente par vissage des surfaces de fixation 23 et 24.

Les profilés 3 de support des modules sont emboîtés sur les profilés d'assise.

Les goulottes 5 sont à leur tour fixées entre deux profilés de support 2. Deux goulottes inférieure et supérieure sont séparée l'une de l'autre d'une distance correspondant à la dimension longitudinale d'un module. Elles seront ainsi au droit des jonctions transversales des modules.

Puis, les modules sont déposés sur les profilés de support 2. Des butées basses sont prévues à proximité de la sablière pour retenir les modules les plus bas dans la pente.

En partie supérieure de la toiture, à proximité du faîtage, des butées hautes permettent des fixer les bords supérieurs des modules les plus haut dans la pente.

Les parecloses 7 peuvent ensuite être emboitées à la jonction longitudinale des modules et fixées aux nervures 35 des profilés de support 2.

Enfin, une tôle de faîtage d'étanchéité, par exemple en zinc, est rapportée à cheval sur la faîtière, recouvrant les extrémités supérieures des modules.

Côté rives et côté sablière, l'étanchéité est effectuée par des pièces appropriées recouvrant les extrémités latérales et inférieures des modules qui sont respectivement agencés en rive et en extrémité inférieure de la toiture.

Le dispositif de l'invention est ainsi simple et rapide de mise en oeuvre, minimisant les opérations de montage et ne nécessitant que peu d'éléments, tout en garantissant l'étanchéité de la toiture recouverte par les modules photovoltaïques. L'évacuation de l'eau est assurée tout en procurant une zone étanche au niveau de l'embase des profilés d'assise, utile au passage des câbles électriques.

## Revendications

1. Dispositif pour la fixation de modules photovoltaïques comportant au moins un premier profilé (2), dit profilé d'assise, présentant la forme générale d'un Oméga (Ω) et comprenant une âme (20), deux ailes latérales (21, 22) s'étendant en regard et deux surfaces de base (23, 24) formant les retours respectifs des extrémités des ailes à l'opposé de l'âme et étant parallèles à l'âme, **caractérisé en ce qu'**il comporte deux gouttières longitudinales (33, 34) associées respectivement de part et d'autre des ailes (21, 22) du profilé (2), les gouttières (33, 34) étant parallèles et disposées à distance des surfaces de base (23, 24) du profilé pour ménager des espaces d'accueil (4).

2. Dispositif selon la revendication 1, **caractérisé en ce qu'**il comporte un ensemble (1) d'au moins deux profilés dont le profilé d'assise (2) et un deuxième profilé (3) qui comprend une âme (30) et deux ailes latérales (31, 32) dont les extrémités opposées à l'âme forment les gouttières longitudinales (33, 34), le deuxième profilé (3) étant agencé par son âme (30) à cheval sur l'âme (20) du premier profilé (2).

3. Dispositif selon la revendication 1 ou 2, **caractérisé en ce que** la partie médiane du premier profilé formée par l'âme (20) et les ailes (21, 22) présente une section de forme générale trapézoïdale, et **en ce que** les surfaces de base (23, 24) constituent des surfaces de fixation dudit dispositif destiné à être fixé sur une charpente.

4. Dispositif selon l'une quelconque des revendications précédentes, **caractérisé en ce que** les ailes (21, 22) du premier profilé (2) comportent en regard de l'espace (4), une pluralité d'orifices (25, 26).

5. Dispositif selon l'une quelconque des revendications précédentes, **caractérisé en ce qu'**il comporte à l'opposée des surfaces de base (23, 24) une nervure longitudinale et centrale (35), dite nervure de butée.

6. Dispositif selon l'une quelconque des revendications précédentes, **caractérisé en ce que** le premier profilé (2) comprend vers ses extrémités distales (28) des moyens de fixation (27) permettant d'y fixer d'autres premiers profilés.

7. Dispositif selon l'une quelconque des revendications précédentes, **caractérisé en** en ce qu'il comporte des goulottes transversales (5) destinées à être agencées transversalement à au moins deux profilés d'assise espacés, et être mises sous et en regard de la jonction transversale de deux modules supérieur et inférieur aboutés, les extrémités distales des goulottes (5) débouchant en regard des goulottes longitudinales (33, 34).

8. Dispositif selon la revendication 7, **caractérisé en** en ce qu'il comporte des systèmes de fixation (6) des goulottes transversales, ces systèmes étant amovibles, réglables en hauteur et fixés aux bords libres (38, 39) des gouttières longitudinales (33, 34), et réalisant le maintien des goulottes à une hauteur proche de l'âme (30) du premier profilé.

9. Dispositif selon la revendications 8, **caractérisé en ce qu'**il comporte au moins une pareclose (7) destinée à coopérer, de préférence par emboîtement, avec la nervure médiane de butée (35) du deuxième profilé et à chevaucher la face externe des bords longitudinaux des modules.

10. Dispositif selon l'une quelconque des revendications précédentes, **caractérisé en ce qu'**il est monté et fixé sur une charpente, les profilés d'assise (2) constituant les chevrons de la charpente, et **en ce qu'**il reçoit des modules photovoltaïques formant tout ou partie du revêtement de la toiture.
